# FASCICULE DE BREVET EUROPEEN

(11) **EP 3 137 875 B1**
(45) Date de publication et mention de la délivrance du brevet: **12.08.2026**
(21) Numéro de dépôt: 15725696.7
(22) Date de dépôt: 24.04.2015
(51) Int. Cl.: G01N 21/17, G01N 21/63

(54) **DISPOSITIFS DE CARACTÉRISATION D'UNE INTERFACE D'UNE STRUCTURE ET PROCÉDÉS CORRESPONDANTS**
VORRICHTUNGEN ZUR CHARAKTERISIERUNG EINER SCHNITTSTELLE EINER STRUKTUR UND ENTSPRECHENDE VERFAHREN
DEVICES FOR CHARACTERIZING AN INTERFACE OF A STRUCTURE AND CORRESPONDING METHODS

(30) Priorité: 30.04.2014 FR 1453969
(43) Date de publication de la demande: 08.03.2017
(73) Titulaire: Centre National de la Recherche Scientifique, 75016 Paris (FR)
(72) Inventeur: DEVOS, Arnaud, F-59320 Ennetières-en-Weppes (FR); EMERY, Patrick, 59000 Lille (FR); LE LOUARN, Arnaud, 59390 Lys lez Lannoy (FR)
(74) Mandataire: IPAZ
(86) Numéro de dépôt international: PCT/FR2015/000084
(87) Numéro de publication internationale: WO 2015/166146

(56) Documents cités:
- FR-A1- 2 887 334
- US-A- 4 710 030
- US-A- 5 633 711
- US-A- 6 069 703
- MANTE P A ET AL: "Towards thin film complete characterization using picosecond ultrasonics", ULTRASONICS SYMPOSIUM, 2008. IUS 2008. IEEE, IEEE, PISCATAWAY, NJ, USA, 2 November 2008 (2008-11-02), pages 1203 - 1206, XP031443450, ISBN: 978-1-4244-2428-3
- SADTLER SABRINA ET AL: "Hypersound Damping in Vitreous Silica Measured by Ultrafast Acoustics", INTERNATIONAL JOURNAL OF THERMOPHYSICS SPRINGER NEW YORK USA, SPRINGER NEW YORK LLC, US, vol. 34, no. 8, 15 September 2013 (2013-09-15), pages 1785 - 1794, XP035346586, ISSN: 0195-928X, [retrieved on 20130915], DOI: 10.1007/S10765-013-1511-2
- DEVOS A ET AL: "Giant oscillations in the picosecond ultrasonics response of crystalline silicon: Connection with the electronic structure", WORLD CONGRESS ON ULTRASONICS, XX, XX, 7 September 2003 (2003-09-07), pages 1197 - 1200, XP002385317

## Description

### Arrière-plan de l'invention

La présente invention concerne le domaine des mesures de propriétés de structure. Plus précisément, la présente invention se rapporte à la caractérisation d'une structure par onde acoustique générée et détectée par impulsion lumineuse.

On connaît déjà, par le brevet américain US 5 748 318, un système pour la caractérisation des films minces et des interfaces entre de tels films, grâce à la mesure de leurs propriétés mécaniques et thermiques. Dans le système décrit, la lumière est absorbée dans la couche mince ou dans une structure faite d'une pluralité de couches minces, et les modifications de réflexion ou de transmission optiques sont analysées. Le changement de réflexion ou de transmission est utilisé pour fournir des informations sur les ondes ultrasonores produites dans la structure. De la sorte, il est possible de déterminer l'épaisseur des couches ainsi que plusieurs propriétés optiques de la structure.

Le brevet US 5 748 318 est ainsi un exemple de mise en œuvre d'un système pompe-sonde connu de l'homme du métier. Dans un tel système, la source lumineuse est un laser à impulsions courtes (par exemple femtoseconde) émettant une onde de longueur d'onde fixée, produisant un premier faisceau, que l'on sépare par une séparatrice en un faisceau dit « pompe » et un faisceau dit « sonde ». On fait ensuite varier le chemin optique du faisceau sonde ou le chemin optique du faisceau pompe par un miroir asservi en position. Il est alors connu que les propriétés de la structure sous l'effet des faisceaux émis provoquent une modification dans les propriétés de réflexion (ou de transmission) de l'onde sonde. En particulier, et de façon connue en soi, en observant la modification de réflexion en fonction du temps, il est possible de déterminer des échos caractéristiques des interfaces d'une structure. L'analyse du signal à écho permet alors de déduire par exemple l'épaisseur du matériau, si l'on connaît la vitesse de propagation de l'onde sonore dans le milieu.

Afin d'augmenter le nombre de caractéristiques extraites, et en particulier à la fois la vitesse et l'épaisseur, on a décrit dans la publication Evidence of Laser-Wavelength effect in Picosecond Ultrasonics: Possible connection with interband transition (Physics Review Letters, 12 Mars 2001, Volume 86, Numéro 12), l'utilisation d'un dispositif pompe-sonde tel que décrit précédemment, mais associé cette fois à un laser accordable en longueur d'onde, permettant ainsi de faire varier la longueur d'onde des signaux émis.

Grâce à ces effets de longueur d'onde, il est alors possible d'accéder à la fois à des caractéristiques d'épaisseur et à des caractéristiques de vitesse pour certains types de structure. En effet, comme décrit dans la publication A Novel Approach using picosecond ultrasonics at variable laser-wavelength for the characterization of Aluminium nitride Films used for microsystem applications (A. DEVOS, G. CARUYER, C. ZINCK et P. ANCEY, World Congress on Ultrasonics (Paris 7-10 Septembre 2003) , pp. 793-796 ISBN 2-9521105-0- 6), pour une structure transparente au faisceau sonde, une interaction acousto-optique apparaît au sein du matériau provoquant l'apparition d'oscillations au lieu des simples impulsions observées par écho. Ces oscillations, dites oscillations de Brillouin, ont une période dépendant de la longueur d'onde de la sonde et de la vitesse du son dans le matériau.

Un autre exemple de dispositif utilisant les oscillations Brillouin est également décrit dans la demande de brevet FR 2 887 334. MANTE P. A. et al: "Towards thin film complete characterization using picosecond ultrasonics", ULTRASONICS SYMPOSIUM, 2008, IUS 2008, IEEE, PISCATAWAY, NJ, USA, 2 novembre 2008, pages 1203-1206, ISBN: 978-1-4244-2428-3 décrit également l'utilisation des oscillations de Brillouin, résultant des interférences entre la lumière de la sonde réfléchie aux interfaces et la lumière partiellement réfléchie par l'impulsion de contrainte. En comparant l'amplitude des oscillations avant et après réflexion, le coefficient de réflexion acoustique à l'interface peut être déterminé. L'impédance acoustique du substrat de silicium étant bien connue, l'impédance acoustique du film peut être déduite, puis sa masse volumique à partir du coefficient de réflexion.

Cependant, le nombre de caractéristiques mesurables selon ces méthodes reste limité, et il n'est pas possible notamment de caractériser de manière précise une surface ou une interface.

### Objet et résumé de l'invention

La présente invention vise à résoudre les différents problèmes techniques énoncés précédemment. En particulier, la présente invention vise à proposer un dispositif permettant de caractériser de manière fiable une interface d'une structure. Plus particulièrement, la présente invention vise à proposer un dispositif permettant de caractériser de manière fiable une surface d'une structure, par exemple sa rugosité, ou une interface entre deux couches d'une structure, par exemple son coefficient de transmission acoustique. L'invention est définie par les revendications indépendantes 1, 3, 7 et 9.

Ainsi, selon un aspect, il est proposé un dispositif de caractérisation d'une interface d'une structure, ladite structure comportant un premier matériau solide et un deuxième matériau séparés par ladite interface. Le dispositif comprend :
- un moyen pour générer une première onde mécanique dans le premier matériau, par exemple un moyen de génération d'un rayonnement de pompe,
- un moyen de formation d'oscillations Brillouin, comprenant un moyen de génération d'un rayonnement de sonde configuré pour se propager au moins en partie dans le premier matériau,
- un moyen de détection de l'évolution temporelle des oscillations Brillouin, notamment dans le premier matériau,
- un moyen d'identification configuré pour identifier, à partir de l'évolution temporelle des oscillations Brillouin, notamment dans le premier matériau, une réflexion de ladite première onde mécanique par ladite interface ou une transmission par ladite interface d'une deuxième onde mécanique interférant avec la première onde mécanique, et
- un moyen de détermination configuré pour déterminer la variation d'amplitude des oscillations Brillouin, notamment dans le premier matériau, avant et après la réflexion ou la transmission par ladite interface.

Grâce à l'étude de l'évolution de l'amplitude des oscillations Brillouin, il devient possible d'évaluer certains paramètres physiques de la structure. Plus précisément, les oscillations Brillouin étant formées par une onde acoustique se propageant sur une certaine distance dans la structure, il est possible d'observer et d'exploiter des phénomènes ondulatoires pouvant caractériser la structure, par exemple les phénomènes d'interférence entre plusieurs ondes ou bien encore les effets de diffraction par des irrégularités de surface notamment.

Préférentiellement, le moyen de détermination est configuré pour déterminer la variation de l'amplitude des oscillations Brillouin en fonction de la longueur d'onde du rayonnement de sonde. L'analyse des oscillations de Brillouin à différentes longueurs d'ondes permet d'affiner la caractérisation de la structure, voire de déterminer des caractéristiques supplémentaires.

Selon l'invention définie par la revendication 1, le deuxième matériau présente une impédance acoustique très différente de celle du premier matériau, étant un gaz, et : le moyen d'identification est configuré pour identifier une réflexion de ladite première onde mécanique par ladite interface, et le moyen de détermination est configuré pour déterminer la variation d'amplitude des oscillations Brillouin avant et après la réflexion par ladite interface, pour caractériser la rugosité de ladite interface.

La transmission de l'onde acoustique par ladite interface dans le deuxième matériau, peut être rendue négligeable, notamment lorsque l'impédance du deuxième matériau est très supérieure à celle du premier matériau (réflexion, par l'interface, de l'onde acoustique, avec changement de signe) ou bien lorsque l'impédance du premier matériau est très supérieure à celle du deuxième matériau (réflexion, par l'interface, de l'onde acoustique, sans changement de signe). Ainsi, le deuxième matériau étant un gaz, par exemple de l'air, c'est-à-dire que ladite interface peut être une surface libre du premier matériau.

Le dispositif permet de caractériser la rugosité de ladite interface, en comparant l'amplitude des oscillations Brillouin avant et après réflexion par ladite surface. Les irrégularités de la surface entraînent alors un phénomène de diffraction de l'onde acoustique qui se traduit par une dispersion de l'onde acoustique réfléchie, et donc par une variation de l'amplitude des oscillations Brillouin mesurées.

Préférentiellement, le moyen de génération d'un rayonnement de sonde est configuré pour changer la longueur d'onde du rayonnement de sonde en fonction de la dimension des rugosités à mesurer. La caractérisation d'un objet par un rayonnement monochromatique est limitée par la longueur d'onde dudit rayonnement. Dans le cas présent, en variant la longueur d'onde du rayonnement de sonde, on caractérise des ondes acoustiques présentant des fréquences différentes dues à des motifs répétitifs de la surface de la structure. Ainsi, la variation de la longueur d'onde permet de caractériser les différents motifs répétitifs de la surface de la structure, c'est-à-dire sa rugosité,

Selon l'invention définie par la revendication 3, le deuxième matériau est une couche mince solide, et : le moyen d'identification est configuré pour identifier une transmission par ladite interface d'une deuxième onde mécanique interférant avec la première onde mécanique, et le moyen de détermination est configuré pour déterminer la variation d'amplitude des oscillations Brillouin avant et après la transmission par ladite interface de la deuxième onde mécanique, pour caractériser le coefficient de transmission acoustique de ladite interface.

On réalise des interférences entre deux ondes dont une a été transmise par une interface. Selon l'amplitude des interférences, déterminées grâce aux oscillations Brillouin, il devient possible d'évaluer l'amplitude de l'onde transmise par l'interface, et donc le coefficient de transmission de l'interface.

Préférentiellement, le moyen pour générer une première onde mécanique dans le premier matériau est configuré pour former la première et la deuxième onde mécaniques simultanément respectivement dans le premier matériau et dans le deuxième matériau. Plus précisément, les deux ondes mécaniques sont formées à l'interface entre le premier et le deuxième matériau, la première onde se propageant dans le premier matériau et la deuxième onde se propageant dans le deuxième matériau. Le deuxième matériau étant une couche mince, la deuxième onde est rapidement réfléchie par la deuxième surface de la deuxième couche et revient vers l'interface entre le premier et le deuxième matériau, qu'elle traverse en partie, selon le coefficient de transmission de ladite interface, pour former la deuxième onde mécanique dans le premier matériau. La deuxième onde mécanique ayant été formée en même temps que la première onde mécanique, les deux ondes sont cohérentes entre elles et peuvent donc interférer, conduisant ainsi à une variation de l'amplitude des oscillations Brillouin mesurées.

Préférentiellement, le dispositif comprend également un moyen d'ajustement des paramètres d'un modèle théorique donnant les valeurs de variation d'amplitude des oscillations Brillouin pour des longueurs d'onde de rayonnement de sonde différentes, afin d'obtenir les variations d'amplitude des oscillations Brillouin déterminées par le moyen de détermination, les paramètres ainsi ajustés permettant de caractériser l'interface et notamment le coefficient de transmission acoustique de l'interface.

Il est possible de prédire, à partir d'un modèle théorique, la forme des oscillations Brillouin pouvant être obtenue à partir d'une structure dont les caractéristiques (dimensions, qualité, matériaux, ...) constituent les paramètres du modèle théorique. Ainsi, en ajustant les paramètres du modèle théorique pour obtenir les oscillations Brillouin observées, il est possible de connaître les caractéristiques de la structure étudiée, par exemple l'épaisseur d'une couche, le coefficient de transmission d'une interface ou bien encore la vitesse acoustique dans une couche. De plus, un tel ajustement s'effectuant sur un nombre de valeurs plus ou moins grande, il est possible de choisir la précision souhaitée dans les résultats obtenus.

Préférentiellement, le moyen de génération d'un rayonnement de pompe et le moyen de génération d'un rayonnement de sonde sont identiques ou différents.

Le moyen de génération d'un rayonnement de pompe et le moyen de génération d'un rayonnement de sonde peuvent comprendre une ou deux sources laser accordables.

Alternativement, ils peuvent comprendre deux moyens d'émission d'un continuum de lumière.

Alternativement, le moyen de génération d'un rayonnement de pompe peut comprendre une source laser fixe, et le moyen de génération d'un rayonnement de sonde peut comprendre une source laser accordable.

Selon un autre aspect, l'invention concerne également un procédé de caractérisation d'une interface d'une structure, ladite structure comportant un premier matériau solide et un deuxième matériau séparés par ladite interface, d'après la revendication 7 et d'après la revendication 9. Selon le procédé :
- on forme dans le premier matériau, par exemple avec un rayonnement de pompe, une première onde mécanique,
- on forme, avec un rayonnement de sonde se propageant au moins en partie dans le premier matériau, des oscillations Brillouin,
- on détecte l'évolution temporelle des oscillations Brillouin, notamment dans le premier matériau,
- on identifie, à partir de l'évolution temporelle des oscillations Brillouin, notamment dans le premier matériau, une réflexion de ladite première onde mécanique par ladite interface ou une transmission par ladite interface d'une deuxième onde mécanique interférant avec la première onde mécanique, et
- on détermine la variation d'amplitude des oscillations Brillouin, notamment dans le premier matériau, avant et après la réflexion ou la transmission par ladite interface.

Préférentiellement, on détermine la variation de l'amplitude des oscillations Brillouin en fonction de la longueur d'onde du rayonnement de sonde.

Selon l'invention définie par la revendication 7, le deuxième matériau présente une impédance acoustique très différente de celle du premier matériau, étant un gaz, et : on identifie une réflexion de ladite première onde mécanique par ladite interface, et on détermine la variation d'amplitude des oscillations Brillouin avant et après la réflexion par ladite interface, pour caractériser la rugosité de ladite interface.

Préférentiellement, on choisit la longueur d'onde du rayonnement de sonde en fonction de la dimension des rugosités à mesurer.

Selon l'invention définie par la revendication 9, le deuxième matériau est une couche mince solide, et : on identifie une transmission par ladite interface d'une deuxième onde mécanique interférant avec la première onde mécanique, et on détermine la variation d'amplitude des oscillations Brillouin avant et après la transmission par ladite interface de la deuxième onde mécanique, pour caractériser le coefficient de transmission acoustique de ladite interface.

Préférentiellement, on forme la première et la deuxième onde mécaniques simultanément respectivement dans le premier matériau et dans le deuxième matériau.

Préférentiellement, on ajuste les paramètres d'un modèle théorique donnant les valeurs de variation d'amplitude des oscillations Brillouin pour des longueurs d'onde de rayonnement de sonde différentes, afin d'obtenir les variations d'amplitude des oscillations Brillouin déterminées, les paramètres ainsi ajustés permettant de caractériser l'interface et notamment le coefficient de transmission acoustique de l'interface.

### Brève description des dessins

L'invention et ses avantages seront mieux compris à la lecture de la description détaillée d'un mode de réalisation particulier, pris à titre d'exemple nullement limitatif et illustré par les dessins annexés sur lesquels :
- la figure **1** est une représentation schématique d'un dispositif de caractérisation selon l'invention,
- la figure **2** est un premier mode de mise en œuvre de l'invention,
- la figure **3** est un exemple de résultat pouvant être obtenu selon le premier mode de mise en œuvre de l'invention,
- la figure **4** est un deuxième mode de mise en œuvre de l'invention,
- la figure **5** est un exemple de résultat pouvant être obtenu selon le deuxième mode de mise en œuvre de l'invention,
- les figures **6** et **7** sont des exemples d'organigramme de mode de mise en œuvre de procédés selon l'invention.

### Description détaillée de l'invention

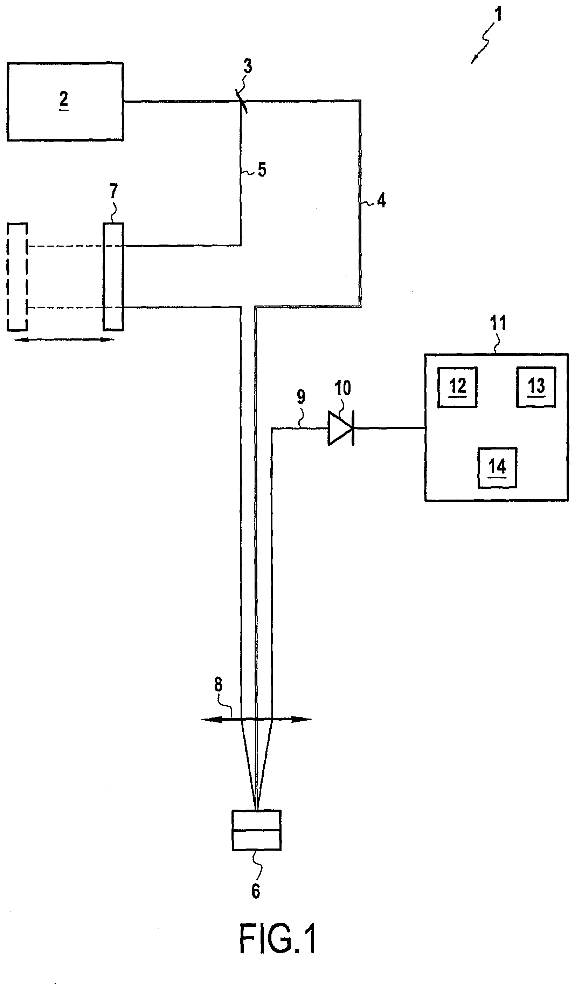

La figure **1** illustre de manière schématique un exemple de mode de réalisation d'un dispositif de caractérisation **1** selon l'invention.

Le dispositif **1** ainsi comprend une source laser **2** à impulsions courtes. Les impulsions courtes de la source doivent être adaptées à la résolution temporelle désirée. Des impulsions de l'ordre de 1 ps ou de 0, 1 ps sont envisageables.

Selon un premier mode de réalisation, cette source est accordable en longueur d'onde par l'intermédiaire d'un oscillateur accordable, par exemple de type titane:saphir, pouvant produire des impulsions de 120 fs à un taux de répétition de 76 MHz, voire 80 MHz, centré sur une longueur d'onde accordable entre 700 nm et 990 nm, voire entre 680 nm et 1070 nm.

Cette source produit un rayonnement qui est séparé par une séparatrice **3** en un rayonnement de pompe **4** et un rayonnement de sonde **5,** tous deux destinés à interagir avec la structure **6** à analyser.

Le rayonnement de sonde **5** est soumis à une variation de chemin optique par rapport au rayonnement de pompe **4,** par exemple par l'intermédiaire d'un miroir mobile **7** asservi en position, afin de le faire parvenir sur la structure **6** avec un décalage temporel par rapport au rayonnement de pompe.

Il est ensuite focalisé sur la structure **6** par une optique **8,** et est réfléchi sous la forme d'un signal **9,** vers un moyen de détection **10,** par exemple de type photodétecteur, destiné à générer un signal pouvant être analysé par un moyen de traitement **11,** par exemple un calculateur de type connu qui permet la mise en oeuvre des traitements selon l'invention.

Alternativement, le signal de sonde peut également être détecté en transmission à travers la structure **6.**

Afin de permettre le bon trajet des signaux de la source à la structure, l'optique est adaptée à la variation de longueur d'onde issue de la source. L'homme du métier est apte à adapter cette optique selon les sources et les gammes de longueur d'onde choisies, et on ne donne ici que quelques exemples d'optiques utilisables.

Les optiques doivent être de préférence large bande, autant pour les miroirs que pour les lentilles traitées. Pour atteindre un rapport signal sur bruit suffisant, les dispositifs pompe-sonde emploient une modulation du rayonnement pompe et une démodulation du rayonnement de sonde. La modulation doit être réalisée en dehors de la plage de bruit du laser, typiquement quelques 100 kHz. Elle est réalisée par un modulateur acousto-optique qui agit comme un réseau commandé électriquement, ou bien par un modulateur électro-optique, ou bien encore par un hacheur optique (en anglais : optical chopper). La diffraction du rayonnement pompe par ce réseau va évoluer avec la longueur d'onde. Ainsi en changeant de longueur d'onde, le rayonnement pompe voit sa direction évoluer si bien qu'il est possible que le dispositif perde son réglage. On peut donc employer un modulateur acousto-optique qu'il est possible de commander avec un signal électrique de fréquence variable. On compense ainsi la déviation du rayonnement pompe en changeant le pas du réseau généré électriquement.

Dans le cas de l'emploi d'une longueur d'onde moitié qui est obtenue par doublage optique dans un cristal non linéaire, par exemple de type BBO (Beta Barium Borate), le doublage repose sur la réalisation d'une condition d'accord de phase dans le cristal qui est reliée à son orientation par rapport au rayonnement. Le changement de longueur d'onde doit être rattrapé sur cet angle. Cette étape est réalisée de façon manuelle ou automatique.

L'homme du métier comprend aisément que les deux rayonnements pompe et sonde peuvent également être générés par deux sources distinctes. Dans ce cas, les sources peuvent être elles-mêmes mobiles afin de générer la variation de chemin optique du rayonnement de sonde par rapport au rayonnement de pompe. Il est également possible d'utiliser une source laser à longueur d'onde fixe, et une source accordable.

Selon un second mode de réalisation, la source **2** permet de générer un continuum de lumière s'étendant sur une large gamme de longueur d'onde. Dans ce cas, le moyen de détection **10** peut comprendre un spectromètre (non représenté) destiné à analyser l'intensité de la lumière reçue avant de transmettre le signal à analyser au moyen de traitement **11.** Tout système de filtres devant un photodétecteur usuel peut également être utilisé.

La pluralité de longueur d'onde est alors réalisée de façon continue, par exemple par un laser femtoseconde à longueur d'onde fixe associé à une fibre optique.

De façon générale, tout type de source permettant de générer des impulsions laser courtes correspondant à un ensemble discret ou continu de longueur d'onde peut être utilisé.

De même, on peut utiliser tout moyen apte à produire un décalage temporel entre le rayonnement pompe et le rayonnement sonde. Ce décalage peut donc être produit par une variation de chemin optique comme précédemment décrit, ou bien par un moyen permettant d'ajuster le temps d'arrivée d'une impulsion par rapport à une autre.

Le moyen de traitement **11** comprend un moyen d'identification **12** et un moyen de détermination **13.**

Le moyen d'identification **12** reçoit l'évolution temporelle des signaux détectés par le moyen de détection **10,** en particulier les oscillations Brillouin. Le moyen d'identification **12** est configuré pour identifier, à partir du signal reçu, une réflexion d'une onde mécanique sur une interface de la structure, ou bien une transmission par une interface de la structure, d'une onde mécanique.

L'identification des oscillations Brillouin avant et après réflexion ou transmission, est alors transmise au moyen de détermination **13** configuré pour déterminer la variation d'amplitude desdites oscillations Brillouin avant et après réflexion ou transmission. Ainsi, le moyen de détermination **13** peut calculer le rapport de l'amplitude maximale des oscillations Brillouin avant réflexion ou transmission, par l'amplitude maximale des oscillations Brillouin après réflexion ou transmission. Le moyen de détermination **13** peut également tenir compte d'un déphasage avant et après réflexion ou transmission.

Préférentiellement, lorsque le moyen de génération du rayonnement de sonde peut émettre un rayonnement de sonde à différentes longueurs d'onde, le moyen de détermination est configuré pour déterminer la variation d'amplitude, avant et après réflexion ou transmission, des oscillations Brillouin, en fonction de la longueur d'onde du rayonnement de sonde.

Enfin, le dispositif de caractérisation **1** peut comprendre un moyen **14** d'ajustement de paramètres d'un modèle théorique. Le moyen **14** d'ajustement comprend un modèle théorique prédisant la variation d'amplitude des oscillations Brillouin en fonction de certaines caractéristiques structurelles (épaisseurs, matériaux, etc) de la structure analysée, et peut, en modifiant ces paramètres, faire coïncider les résultats obtenus expérimentalement avec ceux du modèle théorique. Dans ce cas, lorsque la structure du modèle théorique correspond à celle analysée, il devient possible de connaître les caractéristiques structurelles de la structure analysée grâce aux paramètres obtenus par le moyen d'ajustement **14.**

On décrit maintenant deux modes de réalisation et d'utilisation du dispositif de caractérisation **1** de la figure **1****.**

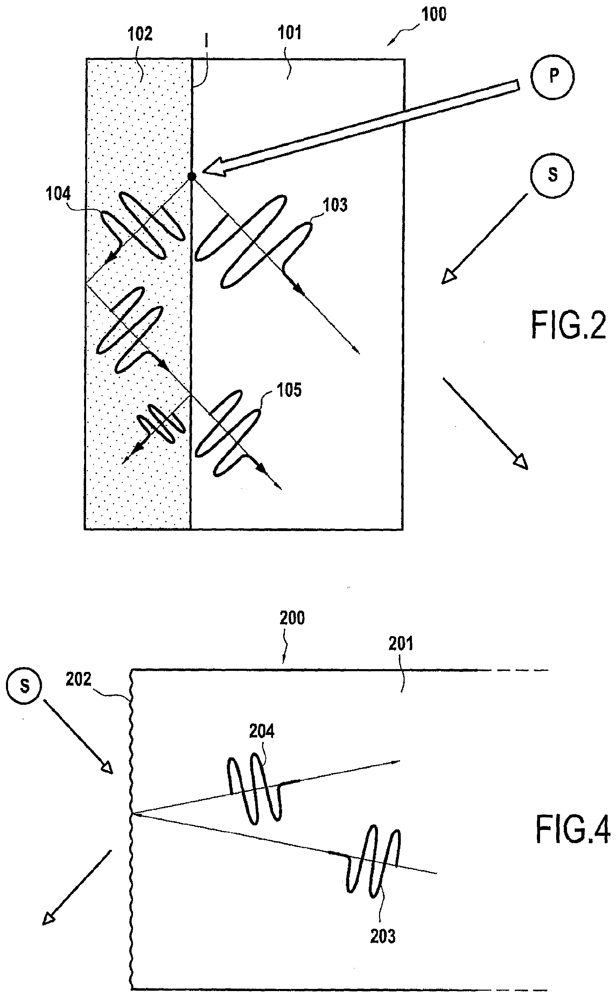

Selon un mode de réalisation, le dispositif **1** est utilisé pour caractériser une interface **I** entre un substrat et une couche mince. Ainsi (voir Figure **2****),** la structure **100** analysée comprend un substrat **101,** de préférence transparent et présentant une épaisseur déterminée, sur lequel est disposée une couche mince **102,** de préférence absorbante. La structure **100** est disposée dans le dispositif **1** de manière à ce que le rayonnement de sonde **S** traverse d'abord le substrat **101** et ensuite la couche mince **102.** La structure **100** peut ainsi être un échantillon d'un panneau solaire comprenant un substrat en verre sur lequel est disposée une électrode.

La couche mince **102** est choisie de manière à absorber le rayonnement de pompe **P.** Ainsi, la formation de l'onde acoustique par le rayonnement de pompe se produit à l'interface **I** entre le substrat **101** et la couche mince **102.**

On observe alors deux ondes acoustiques : une première onde acoustique **103** qui se propage dans le substrat **101** en direction de la surface libre (recevant le rayonnement de sonde **S),** et une deuxième onde acoustique **104** qui se propage dans la couche mince **102.** La couche mince **102** présentant une épaisseur très faible, l'onde acoustique **104** s'y propageant est réfléchie par la surface opposée de la couche mince **102** puis revient vers l'interface **I** qu'elle traverse alors plus ou moins, selon le coefficient de transmission de ladite interface **I.**

La fraction de la deuxième onde acoustique **105** traversant l'interface **I** est cohérente avec la première onde acoustique **103,** et peut ainsi interférer avec elle. Selon la différence de phase entre les deux ondes acoustiques **103** et **105,** et leurs amplitudes respectives, les interférences sont plus ou moins prononcées. Le dispositif de caractérisation **1** permet d'observer les oscillations Brillouin dues à la première onde acoustique **103** puis aux interférences des première et deuxième ondes acoustiques **103** et **105.** On peut ainsi déterminer l'amplitude de la fraction de deuxième onde acoustique **105** ayant interférer avec la première onde acoustique **103,** et en déduire le coefficient de transmission de l'interface **I**.

En particulier, le moyen de traitement **11** permet d'une part d'identifier (grâce au moyen **12)** à quel moment, dans l'observation des oscillations Brillouin, la fraction de deuxième onde acoustique **105** interfère avec la première onde acoustique **103,** puis d'autre part de mesurer la variation d'amplitude des oscillations Brillouin due aux interférences (grâce au moyen **13).**

De préférence, le moyen de traitement **11** peut effectuer cette analyse pour différentes longueurs d'onde, puis comparer (grâce au moyen **14)** les résultats obtenus avec un modèle théorique pour affiner les paramètres structurels de l'échantillon.

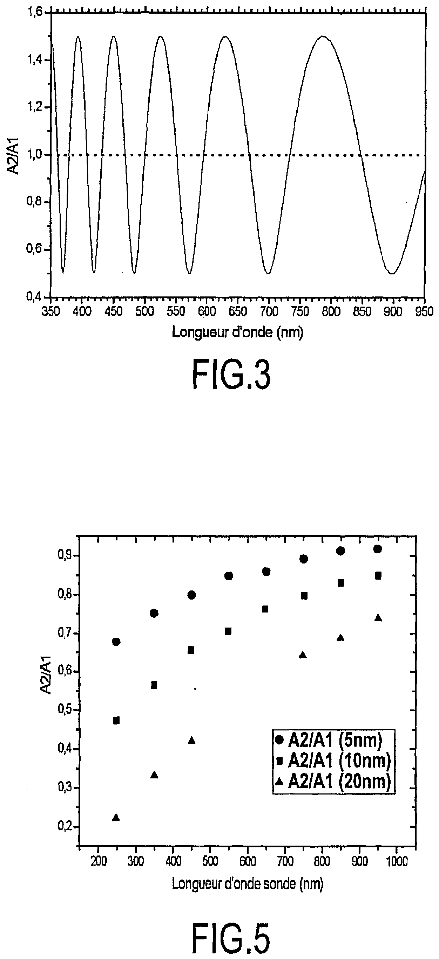

La figure **3** représente un exemple de résultat obtenu par un modèle théorique : la figure représente l'évolution du rapport A2/A1 (A1 étant l'amplitude des oscillations Brillouin correspondant à la première onde acoustique **103** et A2 l'amplitude des oscillations Brillouin correspondant aux interférences de la première onde acoustique **103** et de la fraction de la deuxième onde acoustique **105),** en fonction de la longueur d'onde du rayonnement de sonde. En particulier, l'amplitude de la courbe obtenue (différence entre le rapport A2/A1 le plus petit et le rapport A2/A1 le plus grand) permet de caractériser l'interface **I** entre les deux matériaux, et les différences de longueurs d'onde entre deux extrema successifs permet de caractériser l'épaisseur de la couche mince.

Alternativement, la structure analysée peut être une structure multicouche comprenant plusieurs couches minces sur le substrat transparent. Dans ce cas, les interférences successives avec les ondes transmises par les différentes couches minces peuvent également être utilisées et être interprétées pour caractériser les interfaces entre les différentes couches minces.

Selon un autre mode de réalisation, le dispositif **1** est utilisé pour caractériser la rugosité d'une surface d'une couche donnée. Ainsi (voir Figure **4****),** la structure **200** analysée comprend principalement une couche donnée **201,** de préférence transparente, présentant une surface libre **202** dont la rugosité va être déterminée, et une couche absorbante (non représentée) disposée sur la surface opposée à la surface libre **202.** La structure **200** est disposée dans le dispositif **1** de manière à ce que le rayonnement de sonde **S** traverse d'abord la surface libre **202** à analyser, la couche donnée **201** puis la couche absorbante.

Alternativement, au lieu d'une surface libre **202,** on pourrait prévoir une couche d'un deuxième matériau présentant une impédance acoustique très différente (très supérieure ou très inférieure) à celle de la couche donnée **201,** afin d'obtenir une réflexion quasi-totale de l'onde acoustique par l'interface.

La couche absorbante est choisie de manière à absorber le rayonnement de pompe. Ainsi, la formation de l'onde acoustique par le rayonnement de pompe se produit à l'interface entre la couche donnée **201** et la couche absorbante.

On observe alors une première onde acoustique **203** qui se propage depuis la couche absorbante vers la surface libre **202** de la couche donnée **201,** puis une deuxième onde acoustique **204** due à la réflexion de la première onde acoustique **203** sur la surface libre **202** et qui se propage vers la couche absorbante.

La forme de la deuxième onde acoustique **204** dépend alors de la qualité de la surface libre **202** de la couche donnée, et en particulier de sa rugosité qui va permettre une réflexion plus ou moins correcte. Ainsi, selon la rugosité de la surface libre **202,** la deuxième onde acoustique **204** va se disperser spatialement de manière plus ou moins importante.

Le dispositif de caractérisation **1** permet d'observer les oscillations Brillouin dues à la première onde acoustique **203** puis à la deuxième onde acoustique **204.** On peut ainsi estimer la rugosité de la surface libre **202** ayant réfléchie l'onde acoustique.

En particulier, le moyen de traitement **11** permet d'une part d'identifier (grâce au moyen **12)** à quel moment, dans l'observation des oscillations Brillouin, la première onde acoustique se réfléchie sur la surface libre **202** de la couche donnée pour former la deuxième onde acoustique, puis d'autre part de mesurer la variation d'amplitude des oscillations Brillouin due à la réflexion (grâce au moyen **13).**

De préférence, le moyen de traitement peut effectuer cette analyse pour différentes longueurs d'onde.

La figure **5** représente un exemple de résultats obtenus pour différentes rugosités de surface libre (5nm, 10nm et 20nm) et pour différentes longueurs d'onde de rayonnement de sonde. On constate notamment qu'en diminuant la longueur d'onde du rayonnement de sonde **S,** il est possible d'analyser des ondes acoustiques de plus haute fréquence qui sont plus sensibles à des mêmes irrégularités de la surface libre.

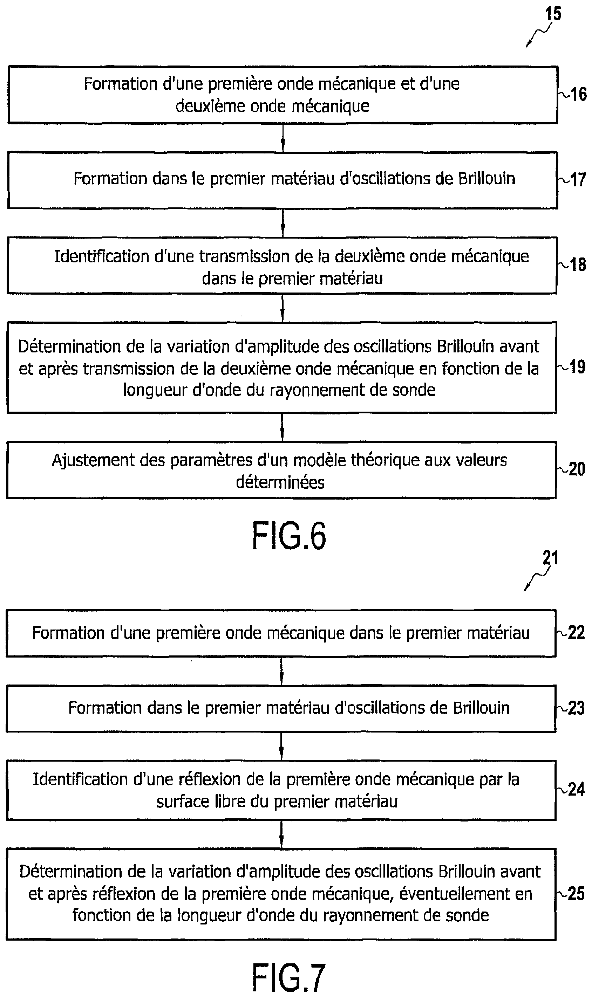

La figure **6** représente un organigramme **15** d'un mode de mise en œuvre d'un procédé de caractérisation d'une interface entre un premier matériau et un deuxième matériau, selon l'invention.

Dans une première étape **16,** on forme une première onde mécanique et une deuxième onde mécanique puis, dans une deuxième étape **17,** on forme des oscillations Brillouin dans le premier matériau. On identifie alors, dans une troisième étape **18,** la transmission de la deuxième onde mécanique dans le premier matériau, et on détermine, au cours d'une quatrième étape **19,** la variation d'amplitude des oscillations Brillouin avant et après transmission de la deuxième onde mécanique. La quatrième étape **19** peut notamment être mise en œuvre en fonction de la longueur d'onde du rayonnement de sonde. Enfin, dans une dernière étape préférentielle **20,** on ajuste les paramètres d'un modèle théorique aux valeurs déterminées.

La figure **7** représente un organigramme **21** d'un mode de mise en œuvre d'un procédé de caractérisation de la rugosité d'une surface d'un premier matériau, selon l'invention.

Dans une première étape **22,** on forme une première onde mécanique dans le premier matériau puis, dans une deuxième étape **23,** on forme des oscillations Brillouin dans le premier matériau. On identifie alors, dans une troisième étape **24,** la réflexion de la première onde mécanique par la surface libre du premier matériau, et on détermine, au cours d'une quatrième étape **25,** la variation d'amplitude des oscillations Brillouin avant et après réflexion de la première onde mécanique. La quatrième étape **25** peut notamment être mise en œuvre en fonction de la longueur d'onde du rayonnement de sonde.

Ainsi, l'objet selon l'invention permet d'obtenir de manière fiable et de manière non-destructive, des caractéristiques d'une structure, en particulier la rugosité d'une surface réfléchissant une onde acoustique, ou bien le coefficient de transmission d'une interface entre deux matériaux. Par ailleurs, l'utilisation d'une sonde à longueur d'onde variable permet d'affiner les caractéristiques précédentes, et d'obtenir des valeurs plus précises et plus complètes aisément.

## Revendications

1. Dispositif (1) de caractérisation d'une interface d'une structure (6), ladite structure (6) comportant un premier matériau solide et un deuxième matériau séparés par ladite interface, le deuxième matériau étant un gaz, ledit dispositif comprenant :
- un moyen (2) pour générer une première onde mécanique dans le premier matériau, par exemple un moyen de génération d'un rayonnement de pompe,
- un moyen de formation d'oscillations Brillouin, comprenant un moyen (2) de génération d'un rayonnement de sonde configuré pour se propager au moins en partie dans le premier matériau, et
- un moyen (10) de détection de l'évolution temporelle des oscillations Brillouin dans le premier matériau,
**caractérisé en ce qu'**il comprend également :
- un moyen (12) d'identification configuré pour identifier, à partir de l'évolution temporelle des oscillations Brillouin dans le premier matériau, une réflexion de ladite première onde mécanique par ladite interface,
- un moyen (13) de détermination configuré pour déterminer la variation d'amplitude des oscillations Brillouin dans le premier matériau avant et après la réflexion par ladite interface, pour caractériser la rugosité de ladite interface.

2. Dispositif selon la revendication 1, dans lequel le moyen (2) de génération d'un rayonnement de sonde est configuré pour changer la longueur d'onde du rayonnement de sonde en fonction de la dimension des rugosités à mesurer.

3. Dispositif (1) de caractérisation d'une interface d'une structure (6), ladite structure (6) comportant un premier matériau solide et un deuxième matériau séparés par ladite interface, le deuxième matériau étant une couche mince solide, ledit dispositif comprenant :
- un moyen (2) pour générer une première onde mécanique dans le premier matériau, par exemple un moyen de génération d'un rayonnement de pompe,
- un moyen de formation d'oscillations Brillouin, comprenant un moyen (2) de génération d'un rayonnement de sonde configuré pour se propager au moins en partie dans le premier matériau, et
- un moyen (10) de détection de l'évolution temporelle des oscillations Brillouin dans le premier matériau,
**caractérisé en ce qu'**il comprend également :
- un moyen (12) d'identification configuré pour identifier, à partir de l'évolution temporelle des oscillations Brillouin dans le premier matériau, une transmission par ladite interface d'une deuxième onde mécanique interférant avec la première onde mécanique,
- un moyen (13) de détermination configuré pour déterminer la variation d'amplitude des oscillations Brillouin avant et après la transmission par ladite interface de la deuxième onde mécanique, pour caractériser le coefficient de transmission acoustique de ladite interface.

4. Dispositif selon la revendication précédente dans lequel le moyen (2) pour générer une première onde mécanique dans le premier matériau est configuré pour former la première et la deuxième onde mécaniques simultanément respectivement dans le premier matériau et dans le deuxième matériau.

5. Dispositif selon l'une quelconque des revendications précédentes, dans lequel le moyen (13) de détermination est configuré pour déterminer la variation de l'amplitude des oscillations Brillouin en fonction de la longueur d'onde du rayonnement de sonde.

6. Dispositif selon la revendication précédente en combinaison avec la revendication 3 ou 4, comprenant également un moyen (14) d'ajustement des paramètres d'un modèle théorique donnant les valeurs de variation d'amplitude des oscillations Brillouin pour des longueurs d'onde de rayonnement de sonde différentes, afin d'obtenir les variations d'amplitude des oscillations Brillouin déterminées par le moyen de détermination, les paramètres ainsi ajustés permettant de caractériser l'interface et notamment le coefficient de transmission acoustique de l'interface.

7. Procédé de caractérisation (15, 21) d'une interface d'une structure, ladite structure comportant un premier matériau solide et un deuxième matériau séparés par ladite interface, le deuxième matériau étant un gaz, dans lequel :
- on forme (16, 22) dans le premier matériau, par exemple avec un rayonnement de pompe, une première onde mécanique,
- on forme (17, 23), avec un rayonnement de sonde se propageant au moins en partie dans le premier matériau, des oscillations Brillouin, et
- on détecte l'évolution temporelle des oscillations Brillouin dans le premier matériau,
**caractérisé en ce que** :
- on identifie (18, 24), à partir de l'évolution temporelle des oscillations Brillouin dans le premier matériau, une réflexion de ladite première onde mécanique par ladite interface, et
- on détermine (19, 25) la variation d'amplitude des oscillations Brillouin dans le premier matériau avant et après la réflexion par ladite interface, pour caractériser la rugosité de ladite interface.

8. Procédé (21) selon la revendication 7 dans lequel on choisit la longueur d'onde du rayonnement de sonde en fonction de la dimension des rugosités à mesurer.

9. Procédé de caractérisation (15, 21) d'une interface d'une structure, ladite structure comportant un premier matériau solide et un deuxième matériau séparés par ladite interface, le deuxième matériau étant une couche mince solide, dans lequel :
- on forme (16, 22) dans le premier matériau, par exemple avec un rayonnement de pompe, une première onde mécanique,
- on forme (17, 23), avec un rayonnement de sonde se propageant au moins en partie dans le premier matériau, des oscillations Brillouin, et
- on détecte l'évolution temporelle des oscillations Brillouin dans le premier matériau,
**caractérisé en ce que** :
- on identifie (18, 24), à partir de l'évolution temporelle des oscillations Brillouin dans le premier matériau, une transmission par ladite interface d'une deuxième onde mécanique interférant avec la première onde mécanique, et
- on détermine (19, 25) la variation d'amplitude des oscillations Brillouin dans le premier matériau, une transmission par ladite interface, pour caractériser le coefficient de transmission acoustique de ladite interface.

10. Procédé (15) selon la revendication précédente dans lequel on forme (16) la première et la deuxième onde mécaniques simultanément respectivement dans le premier matériau et dans le deuxième matériau.

11. Procédé (15, 21) selon l'une quelconque des revendications 7 à 10 dans lequel on détermine (19, 25) la variation de l'amplitude des oscillations Brillouin en fonction de la longueur d'onde du rayonnement de sonde.

12. Procédé (15) selon la revendication précédente en combinaison avec la revendication 9 ou 10, dans lequel on ajuste (20) les paramètres d'un modèle théorique donnant les valeurs de variation d'amplitude des oscillations Brillouin pour des longueurs d'onde de rayonnement de sonde différentes, afin d'obtenir les variations d'amplitude des oscillations Brillouin déterminées, les paramètres ainsi ajustés permettant de caractériser l'interface et notamment le coefficient de transmission acoustique de l'interface.

## Patentansprüche

1. Vorrichtung (1) zur Charakterisierung einer Schnittstelle einer Struktur (6), wobei die Struktur (6) ein erstes festes Material und ein zweites Material umfasst, die durch die Schnittstelle getrennt sind, wobei das zweite Material ein Gas ist, wobei die Vorrichtung umfasst:
- ein Mittel (2), um eine erste mechanische Welle im ersten Material zu erzeugen, zum Beispiel ein Mittel zum Erzeugen einer Pumpstrahlung,
- ein Mittel zur Bildung von Brillouin-Oszillationen, umfassend ein Mittel (2) zum Erzeugen einer Sondenstrahlung, die konfiguriert ist, um sich mindestens teilweise im ersten Material auszubreiten, und
- ein Mittel (10) zum Erfassen des zeitlichen Verlaufs der Brillouin-Oszillationen im ersten Material,
**dadurch gekennzeichnet, dass** sie zudem umfasst:
- ein Identifizierungsmittel (12), das konfiguriert ist, um anhand des zeitlichen Verlaufs der Brillouin-Oszillationen im ersten Material eine Reflexion der ersten mechanischen Welle durch die Schnittstelle zu identifizieren,
- ein Bestimmungsmittel (13), das konfiguriert ist, um die Amplitudenschwankung der Brillouin-Oszillationen im ersten Material vor und nach der Reflexion durch die Schnittstelle zu bestimmen, um die Rauheit der Schnittstelle zu charakterisieren.

2. Vorrichtung nach Anspruch 1, wobei das Mittel (2) zum Erzeugen einer Sondenstrahlung konfiguriert ist, um die Wellenlänge der Sondenstrahlung in Abhängigkeit von der Größe der zu messenden Rauheiten zu ändern.

3. Vorrichtung (1) zur Charakterisierung einer Schnittstelle einer Struktur (6), wobei die Struktur (6) ein erstes festes Material und ein zweites Material umfasst, die durch die Schnittstelle getrennt sind, wobei das zweite Material eine feste Dünnschicht ist, wobei die Vorrichtung umfasst:
- ein Mittel (2), um eine erste mechanische Welle im ersten Material zu erzeugen, zum Beispiel ein Mittel zum Erzeugen einer Pumpstrahlung,
- ein Mittel zur Bildung von Brillouin-Oszillationen, umfassend ein Mittel (2) zum Erzeugen einer Sondenstrahlung, die konfiguriert ist, um sich mindestens teilweise im ersten Material auszubreiten, und
- ein Mittel (10) zum Erfassen des zeitlichen Verlaufs der Brillouin-Oszillationen im ersten Material,
**dadurch gekennzeichnet, dass** sie zudem umfasst:
- ein Identifizierungsmittel (12), das konfiguriert ist, um anhand des zeitlichen Verlaufs der Brillouin-Oszillationen im ersten Material eine Übertragung einer zweiten mechanischen Welle, die mit der ersten mechanischen Welle interferiert, durch die Schnittstelle zu identifizieren,
- ein Bestimmungsmittel (13), das konfiguriert ist, um die Amplitudenschwankung der Brillouin-Oszillationen vor und nach der Übertragung der zweiten mechanischen Welle durch die Schnittstelle zu bestimmen, um den akustischen Übertragungskoeffizienten der Schnittstelle zu charakterisieren.

4. Vorrichtung nach dem vorstehenden Anspruch, wobei das Mittel (2) zum Erzeugen einer ersten mechanischen Welle im ersten Material konfiguriert ist, um die erste und die zweite mechanische Welle gleichzeitig jeweils im ersten Material und im zweiten Material zu bilden.

5. Vorrichtung nach einem der vorstehenden Ansprüche, wobei das Bestimmungsmittel (13) konfiguriert ist, um die Amplitudenschwankung der Brillouin-Oszillationen in Abhängigkeit von der Wellenlänge der Sondenstrahlung zu bestimmen.

6. Vorrichtung nach dem vorstehenden Anspruch in Kombination mit Anspruch 3 oder 4, die zudem ein Mittel (14) zum Einstellen der Parameter eines theoretischen Modells umfasst, das die Werte der Amplitudenschwankungen der Brillouin-Oszillationen für verschiedene Wellenlängen der Sondenstrahlung bereitstellt, um die vom Bestimmungsmittel ermittelten Amplitudenschwankungen der Brillouin-Oszillationen zu erhalten, wobei die so eingestellten Parameter es ermöglichen, die Schnittstelle und insbesondere den akustischen Übertragungskoeffizienten der Schnittstelle zu charakterisieren.

7. Verfahren (15, 21) zur Charakterisierung einer Schnittstelle einer Struktur, wobei die Struktur ein erstes festes Material und ein zweites Material umfasst, die durch die Schnittstelle getrennt sind, wobei das zweite Material ein Gas ist, wobei:
- im ersten Material, zum Beispiel mit einer Pumpstrahlung, eine erste mechanische Welle gebildet wird (16, 22),
- mit einer Sondenstrahlung, die sich mindestens teilweise im ersten Material ausbreitet, Brillouin-Oszillationen gebildet werden (17, 23), und
- der zeitliche Verlauf der Brillouin-Oszillationen im ersten Material erfasst wird, **dadurch gekennzeichnet, dass**
- anhand des zeitlichen Verlaufs der Brillouin-Oszillationen im ersten Material eine Reflexion der ersten mechanischen Welle durch die Schnittstelle identifiziert wird (18, 24), und
- die Amplitudenschwankung der Brillouin-Oszillationen im ersten Material vor und nach der Reflexion durch die Schnittstelle bestimmt wird (19, 25), um die Rauheit der Schnittstelle zu charakterisieren.

8. Verfahren (21) nach Anspruch 7, wobei die Wellenlänge der Sondenstrahlung in Abhängigkeit von der Größe der zu messenden Rauheiten gewählt wird.

9. Verfahren (15, 21) zur Charakterisierung einer Schnittstelle einer Struktur, wobei die Struktur ein erstes festes Material und ein zweites Material umfasst, die durch die Schnittstelle getrennt sind, wobei das zweite Material eine feste Dünnschicht ist, wobei:
- im ersten Material, zum Beispiel mit einer Pumpstrahlung, eine erste mechanische Welle gebildet wird (16, 22),
- mit einer Sondenstrahlung, die sich mindestens teilweise im ersten Material ausbreitet, Brillouin-Oszillationen gebildet werden (17, 23), und
- der zeitliche Verlauf der Brillouin-Oszillationen im ersten Material erfasst wird, **dadurch gekennzeichnet, dass**
- anhand des zeitlichen Verlaufs der Brillouin-Oszillationen im ersten Material eine Übertragung einer zweiten mechanischen Welle, die mit der ersten mechanischen Welle interferiert, durch die Schnittstelle identifiziert wird (18, 24), und
- die Amplitudenschwankung der Brillouin-Oszillationen im ersten Material (19, 25), eine Übertragung durch die Schnittstelle, bestimmt wird, um den akustischen Übertragungskoeffizienten der Schnittstelle zu charakterisieren.

10. Verfahren (15) nach dem vorstehenden Anspruch, wobei die erste und die zweite mechanische Welle gleichzeitig jeweils im ersten Material und im zweiten Material gebildet werden (16).

11. Verfahren (15, 21) nach einem der Ansprüche 7 bis 10, wobei die Amplitudenschwankung der Brillouin-Oszillationen in Abhängigkeit von der Wellenlänge der Sondenstrahlung bestimmt wird (19, 25).

12. Verfahren (15) nach dem vorstehenden Anspruch in Kombination mit Anspruch 9 oder 10, wobei die Parameter eines theoretischen Modells eingestellt werden (20), das die Werte der Amplitudenschwankung der Brillouin-Oszillationen für verschiedene Wellenlängen der Sondenstrahlung bereitstellt, um die ermittelten Amplitudenschwankungen der Brillouin-Oszillationen zu erhalten, wobei die so eingestellten Parameter es ermöglichen, die Schnittstelle und insbesondere den akustischen Übertragungskoeffizienten der Schnittstelle zu charakterisieren.

## Claims

1. A device (1) for characterizing an interface of a structure (6), said structure (6) comprising a first solid material and a second material which are separated by said interface, the second material being a gas, said device comprising:
- a means (2) for generating a first mechanical wave in the first material, such as a means for generating pump radiation,
- a means for forming Brillouin oscillations, comprising a means (2) for generating probe radiation configured to propagate at least partially through the first material, and
- a means (10) for detecting changes over time in Brillouin oscillations in the first material,
**characterized in that** said device also comprises:
- an identification means (12) configured to identify, based on the changes over time in Brillouin oscillations in the first material, a reflection of said first mechanical wave by said interface,
- a determination means (13) configured to determine the variation in amplitude of the Brillouin oscillations in the first material before and after reflection by said interface, in order to characterize the roughness of said interface.

2. The device according to claim 1, wherein the means (2) for generating probe radiation is configured to change the wavelength of the probe radiation depending on the size of the roughness to be measured.

3. A device (1) for characterizing an interface of a structure (6), said structure (6) comprising a first solid material and a second material which are separated by said interface, the second material being a thin solid layer, said device comprising:
- a means (2) for generating a first mechanical wave in the first material, such as a means for generating pump radiation,
- a means for forming Brillouin oscillations, comprising a means (2) for generating probe radiation configured to propagate at least partially through the first material, and
- a means (10) for detecting changes over time in Brillouin oscillations in the first material,
**characterized in that** said device also comprises:
- an identification means (12) configured to identify, based on the changes over time in Brillouin oscillations in the first material, the transmission by said interface of a second mechanical wave interfering with the first mechanical wave,
- a determination means (13) configured to determine the variation in amplitude of the Brillouin oscillations before and after transmission of said second mechanical wave by said interface, in order to characterize the acoustic transmission coefficient of said interface.

4. The device according to the preceding claim, wherein the means (2) for generating a first mechanical wave in the first material is configured to form the first and second mechanical waves simultaneously in the first material and the second material, respectively.

5. The device according to any of the preceding claims, wherein the determination means (13) is configured to determine the variation in amplitude of the Brillouin oscillations depending on the wavelength of the probe radiation.

6. The device according to the preceding claim in combination with claim 3 or claim 4, further comprising a means (14) for adjusting the parameters of a theoretical model providing the values of the variation in amplitude of the Brillouin oscillations for different probe radiation wavelengths, in order to obtain the variations in amplitude of the Brillouin oscillations determined by the determination means, the parameters thus adjusted allowing the interface and, in particular, the acoustic transmission coefficient of the interface, to be characterized.

7. A method for characterizing (15, 21) an interface of a structure, said structure comprising a first solid material and a second material which are separated by said interface, the second material being a gas, wherein:
- a first mechanical wave is formed (16, 22) in the first material, for example using pump radiation,
- Brillouin oscillations are formed (17, 23), using probe radiation propagating at least partially through the first material, and
- the changes over time in Brillouin oscillations in the first material are detected,
**characterized in that**:
- a reflection of said first mechanical wave by said interface is identified (18, 24), based on the changes over time in Brillouin oscillations in the first material, and
- the variation in amplitude of the Brillouin oscillations in the first material before and after reflection by said interface is determined (19, 25), in order to characterize the roughness of said interface.

8. The method (21) according to claim 7, wherein the wavelength of the probe radiation is selected based on the size of the roughness to be measured.

9. A method for characterizing (15, 21) an interface of a structure, said structure comprising a first solid material and a second material which are separated by said interface, the second material being a thin solid layer, wherein:
- a first mechanical wave is formed (16, 22) in the first material, for example using pump radiation,
- Brillouin oscillations are formed (17, 23), using probe radiation propagating at least partially through the first material, and
- the changes over time in Brillouin oscillations in the first material are detected,
**characterized in that**:
- a transmission by said interface of a second mechanical wave interfering with the first mechanical wave is identified (18, 24), based on the changes over time in Brillouin oscillations in the first material, and
- the variation in amplitude of the Brillouin oscillations in the first material, a transmission by said interface, are determined (19, 25), in order to characterize the acoustic transmission coefficient of said interface.

10. The method (15) according to the preceding claim, wherein the first and second mechanical waves are formed (16) simultaneously in the first material and in the second material, respectively.

11. The method (15, 21) according to any of claims 7 to 10, wherein the variation in amplitude of the Brillouin oscillations depending on the wavelength of the probe radiation is determined (19, 25).

12. The method (15) according to the preceding claim in combination with claim 9 or claim 10, wherein the parameters of a theoretical model providing the values of the variation in amplitude of the Brillouin oscillations for different probe radiation wavelengths are adjusted (20), in order to obtain the determined variations in amplitude of the Brillouin oscillations, the parameters thus adjusted allowing the interface and, in particular, the acoustic transmission coefficient of the interface, to be characterized.
